# EUROPEAN PATENT APPLICATION

(11) **EP 4 786 764 A1**
(43) Date of publication of application: **05.08.2026**
(21) Application number: 24872856.0
(22) Date of filing: 24.09.2024
(51) Int. Cl.: F01N 3/20, F01N 3/04, F02B 43/10, F02M 21/02

(54) **AMMONIA TREATMENT SYSTEM OF AMMONIA ENGINE**

(30) Priority: 27.09.2023 KR 20230131024
(71) Applicant: HD Korea Shipbuilding & Offshore Engineering Co., Ltd., Seongnam-si, Gyeonggi-do 13553 (KR)
(72) Inventor: AHN, Yeong Jong, Seongnam-si, Gyeonggi-do 13553 (KR)
(74) Representative: Murgitroyd & Company
(86) International application number: PCT/KR2024/014374
(87) International publication number: WO 2025/071148

(57) **Abstract**

An ammonia treatment system for an ammonia engine is disclosed. An ammonia treatment system for an ammonia engine, according to one embodiment of the present invention, comprises: an ammonia engine; an ammonia supply unit that supplies ammonia to the ammonia engine; an ammonia recovery unit that recovers ammonia from the ammonia engine; an ammonia water generation unit that generates ammonia water from ammonia gas supplied from the ammonia recovery unit; an ammonia water injection unit that injects the ammonia water into an exhaust gas; and a nitrogen oxide reduction unit that removes nitrogen oxide from the exhaust gas mixed with the ammonia water.

## Description

### [Technical Field]

The present disclosure relates to an ammonia treatment system for an ammonia engine, and more particularly, to a system for treating ammonia generated in an ammonia engine.

### [Background]

There are various means of transportation in the industrial field. For example, a vehicle may be used as a means of transportation for ground-based movement, a ship may be used as a means of transportation for water-based movement, and an aircraft may be used as a means of transportation for air-based movement.

The transportation means may obtain power for movement in various ways. Representatively, the transportation means may include a body defining an appearance, and may include an internal combustion engine provided inside the body to combust the fuel to generate power.

The internal combustion engine, that is, an engine, discharges exhaust gas generated after combustion of the fuel to the outside. However, the exhaust gas generated after the combustion of the fuel contains various harmful substances, which may be an important problem for environmental pollution.

Various attempts are being made to solve this problem. For example, in order to suppress the generation of harmful substances including carbon components generated from the combustion of petroleum fuel, eco-friendly fuel may be used together with petroleum fuel or as a substitute for a petroleum softener.

The eco-friendly fuel may be various. For example, the engine may generate power by combusting the ammonia fuel together with the petroleum fuel or in place of a petroleum fuel. An engine using the fuel including ammonia is hereinafter referred to as an ammonia engine.

In this regard, the ammonia engine may not consume the entirety of the supplied ammonia and a portion of the ammonia may be recovered. For example, the portion of the oversupplied ammonia may be recovered from the ammonia engine to maintain the pressure of the ammonia supplied to the ammonia engine or to cool the ammonia engine.

The ammonia recovered from the ammonia engine may be supplied to the ammonia engine through the supply line of ammonia again and may be re-used. However, a portion thereof may not be reused and may be disposed of.

The discarded ammonia may be harmful when being directly exposed to the environment, and therefore it is necessary to treat the discarded ammonia in an appropriate manner and discharge the treated ammonia to the outside out of the ammonia engine system.

KR 10-2023-0030937 A1 as the related document discloses a treatment system for the disposal of ammonia gas. The treatment system of the related document provides fresh water to ammonia gas to generate ammonia water having the ammonia gas absorbed therein, and discards the ammonia water to reduce the ammonia gas discharged into the air.

However, even when the ammonia gas is treated into the ammonia water, the ammonia water is a material that needs to be prevented from being directly discharged to the environment, and thus there is still a problem of the disposal of the ammonia water.

Therefore, it is an important task in the art to effectively treat waste ammonia generated in the ammonia engine using the ammonia as the fuel and to efficiently utilize the waste ammonia to reduce the amount of ammonia to be disposed of.

### [Summary]

### [Technical Purpose]

Embodiments of the present disclosure are to provide an ammonia treatment system for an ammonia engine including an ammonia engine that efficiently uses ammonia.

In addition, embodiments of the present disclosure are intended to provide an ammonia treatment system for an ammonia engine capable of improving environmental pollution by efficiently treating recovered ammonia generated in the ammonia engine.

In addition, embodiments of the present disclosure are intended to provide an ammonia treatment system for an ammonia engine capable of reducing ammonia emission by effectively consuming ammonia water.

In addition, embodiments of the present disclosure are intended to provide an ammonia treatment system for an ammonia engine capable of effectively reducing nitrogen oxides in the exhaust gas using the ammonia water.

### [Technical Solution]

An ammonia treatment system for an ammonia engine according to an embodiment of the present disclosure comprises: an ammonia engine driven by consuming fuel containing ammonia; an ammonia supply unit configured to supply the ammonia to the ammonia engine; an ammonia recovery unit configured to recover unconsumed ammonia from the ammonia engine; and an ammonia water generation unit configured to generate ammonia water from ammonia gas supplied from the ammonia recovery unit.

The ammonia treatment system for the ammonia engine according to an embodiment of the present disclosure may further comprise an ammonia water injection unit provided in an exhaust line through which exhaust gas discharged from the ammonia engine flows, wherein the ammonia water injection unit is configured to inject the ammonia water supplied from the ammonia water generation unit to the exhaust gas; and a nitrogen oxide reduction unit provided in the exhaust line and configured to remove nitrogen oxide from the exhaust gas mixed with the ammonia water.

The ammonia water generation unit may include a gas separator configured to receive ammonia from the ammonia recovery unit and separate the ammonia into ammonia gas and ammonia liquid.

The ammonia recovery unit may include a recovery line constructed to connect the ammonia engine and the ammonia supply unit to each other and guide the ammonia recovered from the ammonia engine to flow to the ammonia supply unit.

The gas separator may be connected to a recovery branch line branching from the recovery line and receives ammonia from the ammonia recovery unit via the recovery branch line. The gas separator may supply collected ammonia liquid to the ammonia recovery unit or the ammonia supply unit.

The ammonia water generation unit may include a scrubber configured to cause the ammonia gas to be absorbed into scrubbing water to generate the ammonia water.

The ammonia water generation unit may further include an ammonia water storage tank configured to receive and store therein the ammonia water from the scrubber.

The ammonia water generation unit may be configured to cause the ammonia gas to be absorbed into scrubbing water supplied through a scrubbing water supply unit, thereby generating the ammonia water.

The ammonia treatment system may further comprise an ammonia water line connecting the ammonia water generation unit and the ammonia water injection unit to each other, wherein the ammonia water flows in the ammonia water line, wherein an ammonia water pump configured to adjust a pressure of the ammonia water may be disposed in the ammonia water line.

The ammonia water generation unit may include: a scrubber configured to cause the ammonia gas to be absorbed into scrubbing water to generate the ammonia water; and an ammonia water storage tank constructed to receive the ammonia water from the scrubber and to store therein the ammonia water.

The ammonia water storage tank may be connected to the ammonia water injection unit through an ammonia water line and may supply the ammonia water to the ammonia water injection unit via the ammonia water line.

An ammonia injection unit connected to the ammonia supply unit and configured to inject the ammonia to the exhaust gas may be disposed in the exhaust line,

The ammonia treatment system may further comprise a nitrogen oxide measuring unit configured to measure an amount of nitrogen oxide in the exhaust gas, wherein the nitrogen oxide measuring unit may be disposed in the exhaust line and at a position downstream of the nitrogen oxide reduction unit, wherein an amount of ammonia injected from the ammonia injection unit may be adjusted based on a measurement value of the nitrogen oxide measurement unit.

The ammonia supply unit may be further configured to supply ammonia liquid to the ammonia injection unit.

The ammonia supply unit may include a supply pump for flowing ammonia to a supply line connected to the ammonia engine and an injection pump for flowing ammonia to an injection line connected to the ammonia injection unit.

The ammonia water generation unit may be connected to the ammonia supply unit and receives ammonia therefrom. The ammonia supply unit may be connected to the ammonia water generation unit via an additional supply line and may be configured to supply ammonia gas to the ammonia water generation unit via the additional supply line.

The ammonia water generation unit may be configured to cause the ammonia gas supplied from the ammonia recovery unit and the ammonia supplied from the ammonia supply unit to be absorbed into scrubbing water, thereby generating the ammonia water.

The ammonia water generation unit may include: a scrubber configured to cause the ammonia gas supplied from the ammonia recovery unit to be absorbed into scrubbing water to generate the ammonia water; and an ammonia water storage tank constructed to receive the ammonia water from the scrubber and to store therein the ammonia water.

The ammonia water storage tank may be configured to provide ammonia supplied from the ammonia supply unit to the ammonia water.

The ammonia water generation unit may include an ammonia concentration measurement unit configured to measure an ammonia concentration in the ammonia water in the ammonia water storage tank.

An additional supply valve whose an opening ratio may be adjusted based on a measurement value of the ammonia concentration measurement unit may be disposed in an additional supply line connecting the ammonia supply unit and the ammonia water generation unit to each other.

The ammonia water storage tank may include a temperature controller for controlling a temperature of the ammonia water. The temperature controller may include a cooling water line through which cooling water flows.

The ammonia water generation unit may further include an ammonia water additional storage tank configured to receive and store therein the ammonia water from the ammonia water storage tank. The ammonia water storage tank may be connected to the ammonia water additional storage tank through a first ammonia water line. The ammonia water additional storage tank may be connected to the ammonia water injection unit through a second ammonia water line.

### [Advantageous Effects]

Embodiments of the present disclosure may provide the ammonia treatment system for the ammonia engine including the ammonia engine that efficiently uses the ammonia.

In addition, embodiments of the present disclosure may provide the ammonia treatment system for the ammonia engine capable of efficiently treating the recovered ammonia generated from the ammonia engine to reduce environmental pollution.

In addition, embodiments of the present disclosure may provide the ammonia treatment system for the ammonia engine capable of reducing ammonia emission by effectively consuming the ammonia water.

In addition, embodiments of the present disclosure may provide the ammonia treatment system for the ammonia engine capable of effectively reducing nitrogen oxides in exhaust gas using the ammonia water.

### [Brief Description of Drawings]

FIG. 1 is a diagram illustrating a vehicle equipped with an engine.
FIG. 2 is a diagram illustrating a ship equipped with an engine.
FIG. 3 is a diagram illustrating a system of an ammonia engine according to an embodiment of the present disclosure.
FIG. 4 is a diagram conceptually illustrating an ammonia treatment system for an ammonia engine including an ammonia water generation unit in an embodiment of the present disclosure.
FIG. 5 is a diagram showing an exhaust gas purification unit in an embodiment of the present disclosure.
FIG. 6 is a diagram schematically showing an ammonia water generation unit in an embodiment of the present disclosure.
FIG. 7 is a diagram illustrating an ammonia treatment system for an ammonia engine including an ammonia water generation unit in an embodiment of the present disclosure.
FIG. 8 is a diagram illustrating an ammonia treatment system for an ammonia engine provided with an ammonia water injection unit and a nitrogen oxide reduction unit in an embodiment of the present disclosure.
FIG. 9 is a diagram conceptually illustrating a process in which the exhaust gas to which ammonia water is supplied is treated by the nitrogen oxide reduction unit in an embodiment of the present disclosure.
FIG. 10 is a diagram illustrating an ammonia treatment system for an ammonia engine in which an ammonia water storage tank is included in an ammonia water generation unit in an embodiment of the present disclosure.
FIG. 11 is a diagram illustrating an ammonia treatment system for an ammonia engine in which ammonia is supplied from an ammonia supply unit to an ammonia water injection unit in an embodiment of the present disclosure.
FIG. 12 is a diagram illustrating an ammonia treatment system for an ammonia engine in which ammonia is supplied from an ammonia supply unit to an ammonia water generation unit in an embodiment of the present disclosure.
FIG. 13 is a diagram illustrating an ammonia treatment system for an ammonia engine in which an ammonia water storage tank and an ammonia water additional storage tank are provided in an ammonia water generation unit in an embodiment of the present disclosure.

### [Best Mode]

Hereinafter, embodiments of the present disclosure will be described in detail with reference to the accompanying drawings so that those skilled in the art may easily implement the present disclosure.

However, the present disclosure may be implemented in various different forms and is not limited to the embodiments described herein. In addition, in order to clearly illustrate the present disclosure in the drawings, parts irrelevant to the description are omitted, and similar parts are denoted by similar reference numerals throughout the specification.

In the present specification, redundant descriptions of the same components will be omitted.

In addition, in the present specification, when it is mentioned that a component is 'connected' or 'coupled' to another component, it should be understood that the component may be directly connected or coupled to another component, or still another component may exist therebetween. On the other hand, in the present specification, when it is mentioned that a certain component is 'directly connected' or 'directly coupled' to another component, it should be understood that still another component does not exist therebetween.

In addition, the terms used in the present specification are used only to describe specific embodiments, and are not used with the intention of limiting the present disclosure.

In addition, in the present specification, a singular expression may include a plurality of expressions unless the context clearly indicates otherwise.

In addition, in this specification, terms such as 'include' or 'have' are intended to designate that features, numbers, steps, operations, components, parts, or combinations thereof described in the specification exist, and it should be understood that the presence or addition of one or more other features, numbers, steps, operations, components, parts, or combinations thereof is not precluded.

In addition, in the present specification, the term 'and/or' includes a combination of a plurality of described items or one of a plurality of described items. In the present specification, 'A or B' may include 'A', 'B', or 'both A and B'.

A driving system including the engine may be provided in various moving objects. The moving object is a means of moving in various environments such as sea, ground, and air, and may correspond to a vehicle, a ship, an aircraft, and the like. The moving object may include a body 1 having an engine embedded therein and defining an exterior.

In an embodiment of the present disclosure, the engine may be provided not only in a moving object but also in various objects requiring generation of power such as a power plant. Hereinafter, for convenience of description, an engine system provided for the moving object will be described. However, the present disclosure is not limited thereto.

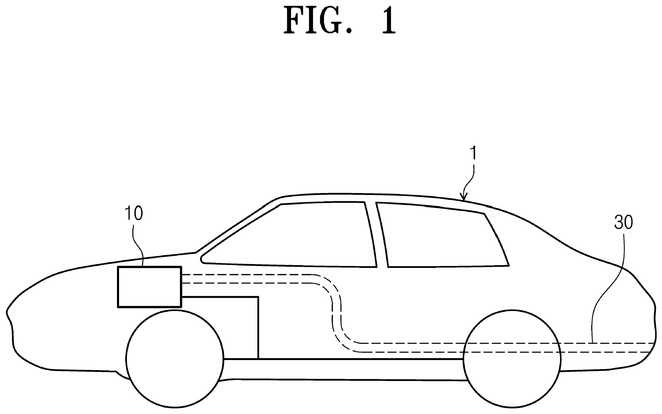

FIG. 1 illustrates a vehicle equipped with an engine according to an embodiment of the present disclosure. The vehicle is a moving object moving on the ground, and may be provided with an engine that obtains power through combustion of fuel.

In the vehicle, the power of the engine may be transmitted to the wheel through the driving line, and the wheel may be rotated through the power to move the vehicle. The driving line may include various power transmission means such as a crank shaft, a transmission, and a wheel shaft.

The exhaust gas generated after combustion of fuel in the engine may flow along an exhaust line 35 extending from the engine to the outside out of the body 1 of the vehicle and may be discharged to the outside out of the body 1.

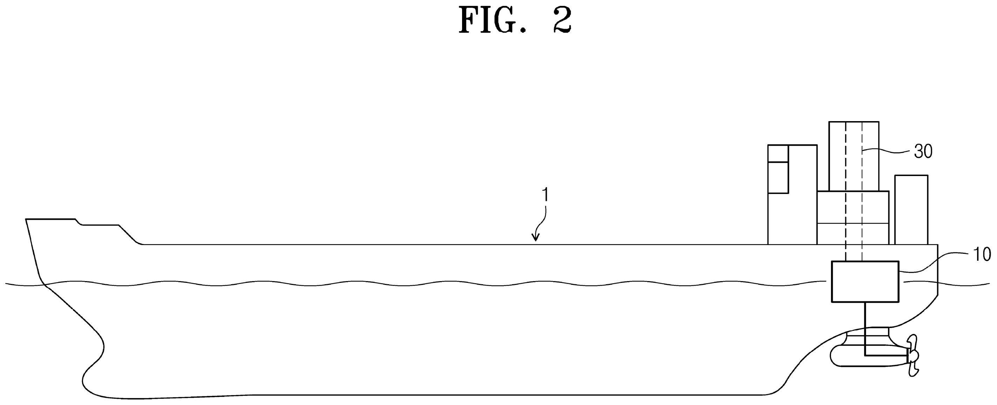

FIG. 2 illustrates a ship provided with an engine according to an embodiment of the present disclosure. The ship is a moving object that moves on sea, and an engine that obtains power through combustion of fuel may be provided in the ship.

In the ship, the power of the engine may be transmitted to a propulsor through the driving line, and the propulsor may be submerged in seawater and rotated through the power to generate the propulsion power of the ship. The propulsor may include a propeller that is exposed to seawater and rotates.

The exhaust gas generated after combustion of the fuel in the engine may flow along the exhaust line 35 extending from the engine to the outside out of the body 1 of the ship and may be discharged to the outside out of the body 1. FIG. 2 shows the exhaust line 35 extending approximately upwardly from the engine and extending to a position on top of the deck.

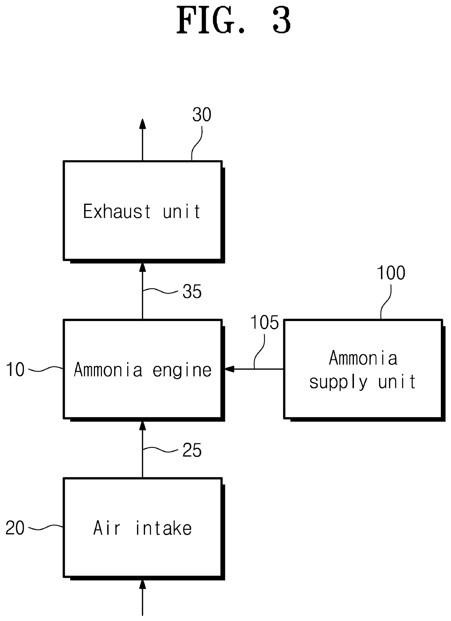

A basic system of an ammonia engine 10 according to an embodiment of the present disclosure is illustrated in FIG. 3.

The ammonia engine 10 according to an embodiment of the present disclosure may be provided in the body 1 defining the outer appearance of the moving object such as a vehicle, a ship, an airplane, and the like. However, as described above, the ammonia engine 10 may be provided inside a stator such as a power plant.

The ammonia engine 10 may be driven by consuming a fuel including ammonia. The ammonia engine 10 may operate using only ammonia as fuel, or using a mixture of ammonia and various fuels such as gasoline, diesel, NP gas, and NG gas as the fuel.

When the mixed fuel is used as described above, a plurality of fuel injectors provided in the ammonia engine 10 may be configured to respectively inject different components into a single cylinder. For example, a first injector may be configured to inject diesel fuel and a second injector may be configured to inject the ammonia.

The ammonia engine 10 may operate with consuming ammonia supplied through an ammonia supply unit as the fuel. The ammonia engine 10 may generate power by combusting a gas in which air and ammonia are mixed with each other.

Specifically, the ammonia engine 10 may be supplied with air through an air intake 20. The air intake 20 may supply the air to the ammonia engine 10 through an intake line 25 connected to the ammonia engine 10.

In the present disclosure, the 'line' may embodied as a component such as a pipe and may refer to a path through which the fluid flows. A certain component may be provided at an arbitrary point in a specific line. For example, a turbocharger or the like may be provided at one point of the intake line 25.

In one example, the ammonia engine 10 may be connected to an ammonia supply unit 100 that supplies ammonia to the ammonia engine 10. The ammonia supply unit 100 may be connected to the ammonia engine 10 through a supply line 105.

Ammonia may flow through the supply line 105. When necessary, a mixed fuel of the ammonia and another type of fuel may flow through the supply line. Hereinafter, for convenience of description, the present disclosure will be described based on the flow of ammonia in the supply line 105.

The ammonia engine 10 may obtain power by combusting a gas in which air and ammonia are mixed with each other, and the exhaust gas generated after the combustion thereof may be discharged through an exhaust unit 30.

The exhaust unit 30 flows the exhaust gas generated from the ammonia engine 10. The exhaust gas may be transferred to the exhaust unit 30 through the exhaust line 35 connected to the ammonia engine 10.

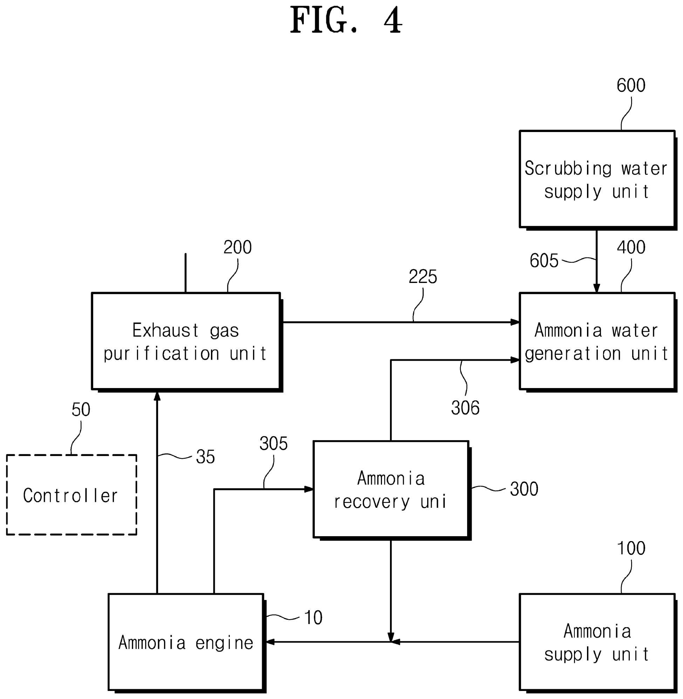

FIG. 4 conceptually illustrates an ammonia treatment system for an ammonia engine according to an embodiment of the present disclosure.

The ammonia treatment system for an ammonia engine according to an embodiment of the present disclosure may include an ammonia recovery unit 300 configured to recover ammonia that is not consumed in the ammonia engine 10.

The ammonia supplied to the ammonia engine 10 may not be entirely consumed by the ammonia engine 10. For example, ammonia may be oversupplied to the ammonia engine 10 in order to maintain the pressure of ammonia supplied to the ammonia engine 10, or to be utilized as a cooling water for the ammonia engine 10. Alternatively, the ammonia may be unintentionally over-supplied to a level above the consumption level of the ammonia engine 10.

Furthermore, even when the ammonia amount corresponding to the consumption amount of the ammonia engine 10 is supplied thereto, a portion of the ammonia may remain without being consumed for various reasons such as an operating environment of the ammonia engine 10.

In an embodiment of the present disclosure, the ammonia recovery unit 300 may recover ammonia that is not consumed in the ammonia engine 10. The recovered ammonia recovered from the ammonia engine 10 may be transferred to the ammonia recovery unit 300 through an ammonia recovery line 305 connected to the ammonia engine 10.

The ammonia recovery unit 300 may supply the recovered ammonia to the ammonia supply unit 100 or the supply line 105 again. The ammonia recovery line 305 may be connected to the ammonia engine 10 and the supply line 105.

In one example, the ammonia treatment system for the ammonia engine according to an embodiment of the present disclosure may include a scrubbing water supply unit 600. The scrubbing water supply unit 600 may be connected to an ammonia water generation unit 400 to be described later.

The scrubbing water supply unit 600 may be connected to the ammonia water generation unit 400 through a scrubbing water line 605. The scrubbing water supply unit 600 may supply the scrubbing water to the ammonia water generation unit 400 through the scrubbing water line 605.

The scrubbing water is water for generating ammonia water to be described later, and may be fresh water that is not used for other purposes. However, the scrubbing water does not necessarily have to be the fresh water, and may be water reused after being used for other purposes as necessary.

In one example, the ammonia treatment system for the ammonia engine according to an embodiment of the present disclosure may include an exhaust gas purification unit 200. The exhaust gas purification unit 200 may supply water to the exhaust line 35 of the ammonia engine 10 to generate treated water that absorbs harmful substances in the exhaust gas.

The exhaust gas purification unit 200 may be a part of the exhaust unit 30. The exhaust gas purification unit 200 may be provided in the exhaust line 35. The exhaust gas purification unit 200 may be configured to reduce harmful substances from the exhaust gas flowing through the exhaust line 35.

The exhaust gas purification unit 200 may reduce harmful substances of the exhaust gas in various ways. For example, the exhaust gas purification unit 200 may purify the exhaust gas by generating the treated water into which harmful substances of the exhaust gas are absorbed. A detailed purification process of the exhaust gas purification unit 200 will be described later.

The ammonia treatment system for the ammonia engine according to an embodiment of the present disclosure may include the ammonia water generation unit 400. The ammonia water generation unit 400 may generate the ammonia water from the ammonia gas supplied from the ammonia recovery unit 300.

The ammonia water generation unit 400 may receive the scrubbing water from the scrubbing water supply unit 600. In addition, the ammonia water generation unit 400 may receive the treated water from the exhaust gas purification unit 200, when necessary.

The ammonia water generation unit 400 may generate the ammonia water by providing the ammonia gas to the scrubbing water and/or the treated water. The ammonia water generation unit 400 may be connected to the scrubbing water supply unit 600 through the scrubbing water line 605 to receive the scrubbing water. The ammonia water generation unit 400 may be connected to the exhaust gas purification unit 200 through a treated water transfer line 225 to receive the treated water.

When the ammonia generation unit 400 is connected only to the scrubbing water supplier 600, the treated water transfer line 225 may be omitted.

The ammonia water generation unit 400 may receive the recovered ammonia from the ammonia recovery unit 300. The ammonia water generation unit 400 may be connected to the ammonia recovery unit 300 through a recovery branch line 306. The ammonia water generation unit 400 may receive ammonia from the ammonia recovery unit 300 through the recovery branch line 306.

In an embodiment of the present disclosure, at least a portion of the ammonia gas in the remaining ammonia that is not consumed in the ammonia engine 10 may be removed through the ammonia water generation unit 400. This may reduce the emission amount of ammonia gas generated during the operation of the ammonia engine 10.

The ammonia water generation unit 400 may remove ammonia gas in various ways. For example, the ammonia water generation unit 400 may cause the ammonia gas to be absorbed into the water to remove the ammonia gas. The ammonia water having the ammonia gas absorbed therein may be kept/stored and then may be discarded, or may be used and consumed in various ways as described later.

The ammonia water generation unit 400 may provide the ammonia gas to the scrubbing water as well as the treated water to cause the ammonia gas to be absorbed therein to generate the ammonia water. This may greatly reduce the amount of the ammonia gas discharged into the air.

Furthermore, in an embodiment of the present disclosure, when the water used for generating the ammonia water is not the above-described scrubbing water but the treated water used for removing the harmful substances of the exhaust gas, there is an advantage in terms of recycling wastewater.

In addition, the treated water may have acidity by absorbing harmful substances including carbon oxides and/or nitrogen oxides in the exhaust gas, the ammonia water having the ammonia gas absorbed therein may have basicity according to the properties of the ammonia. Thus, the ammonia water generation unit 400 may allow the ammonia to be absorbed into the treated water having acidity such that the generated ammonia water is neutralized, which may be advantageous in environmental problems during disposal or safety problems during handling.

In one example, the ammonia treatment system for the ammonia engine according to an embodiment of the present disclosure may include a controller 50.

The controller 50 may be configured to control at least one of the ammonia engine 10, the ammonia supply unit 100, the exhaust gas purification unit 200, the ammonia recovery unit 300, and the ammonia water generation unit 400. The controller 50 may include a single control module or a plurality of control modules.

For example, in an embodiment of the present disclosure, the controller 50 may control the ammonia supply unit 100 to supply ammonia to the ammonia engine 10, control the ammonia engine 10 to operate using the ammonia, control the ammonia recovery unit 300 to recover the ammonia or adjust the amount of recovered ammonia, control the exhaust gas purification unit 200 to generate the treated water or adjust the amount of production thereof, and control the ammonia water generation unit 400 to generate the ammonia water or adjust the amount of the generated ammonia water.

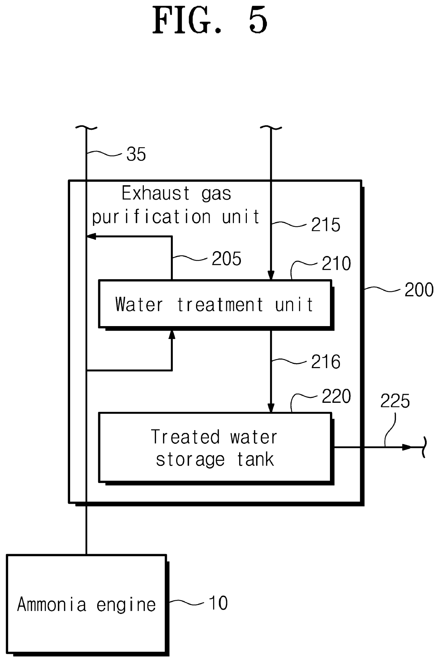

In FIG. 5, the exhaust gas purification unit 200 provided in the exhaust line 35 is illustrated in an embodiment of the present disclosure.

As described above, the exhaust gas purification unit 200 may generate the treated water in which harmful substances of the exhaust gas are absorbed in the supplied water. An example of the exhaust gas purification unit 200 will be described as follows.

The exhaust gas purification unit 200 may include a water treatment unit 210 for supplying the water to the exhaust gas. The water treatment unit 210 may be provided in a purification line 205 that directly supplies water to the exhaust line 35 or is branched from the exhaust line 35 so as to bypass one point of the exhaust line 35.

When the purification line 205 is provided, the water treatment unit 210 may be provided in the purification line 205 to supply water to the exhaust gas flowing through the purification line 205 to recover the treated water. The water treatment unit 210 may be connected to a purifying water supply line 215 through which water to be provided to the exhaust gas is supplied.

The purifying water supplied to the water treatment unit 210 through the purifying water supply line 215 may be supplied to the exhaust gas to absorb harmful substances of the exhaust gas.

The water treatment unit 210 may allow the harmful substances to be absorbed into the purifying water in various ways. For example, the water treatment unit 210 may injection or flow the purifying water into a chamber communicating with the purification line 205 such that the purifying water contacts the exhaust gas, thereby causing the harmful substances of the exhaust gas to be absorbed into the purifying water.

The purifying water supplied to the water treatment unit 210 through the purifying water supply line 215 may be the fresh water as described above, but is not necessarily limited thereto. The purifying water may be water generated with being used for a specific purpose when necessary. For example, when necessary, the ammonia water generated from the ammonia water generation unit 400 may be supplied to the water treatment unit 210 through the purifying water supply line 215.

In one example, the treated water that has absorbed the harmful substances of the exhaust gas therein in the water treatment unit 210 may be discharged from the water treatment unit 210 through a treated water discharge line 216 connected to the water treatment unit 210. The exhaust gas purification unit 200 may include a treated water storage tank 220, and the treated water storage tank 220 may be connected to the water treatment unit 210 through the treated water discharge line 216.

The treated water storage tank 220 may be configured to store therein the treated water delivered thereto through the treated water discharge line 216. The treated water stored in the treated water storage tank 220 may be discharged from the treated water storage tank 220 through the treated water transfer line 225 connected to the treated water storage tank 220.

The treated water flowing along the treated water transfer line 225 may be disposed of or supplied to the ammonia water generation unit 400 as described above. For example, the ammonia water generation unit 400 may be connected to the treated water storage tank 220 through the treated water transfer line 225 to receive the treated water.

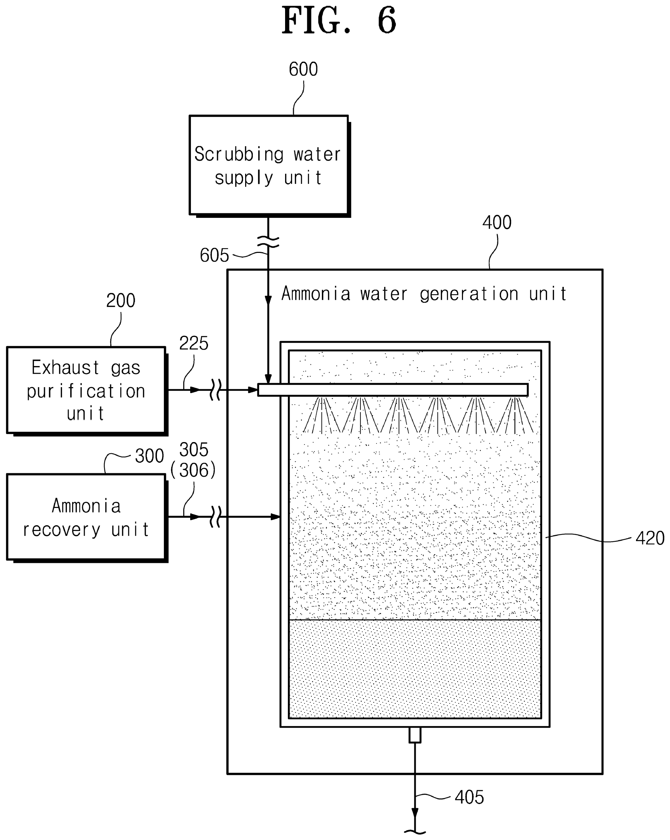

In one example, in FIG. 6, the ammonia water generation unit 400 in the ammonia treatment system for the ammonia engine according to an embodiment of the present disclosure is illustrated.

In an example of the ammonia water generation unit 400, the ammonia water generation unit 400 may include a scrubber 420. The scrubber 420 may receive ammonia from the ammonia recovery unit 300. The ammonia water generation unit 400 is not limited to the scrubber, and may be formed in a form of an absorption tank or an integrated absorption tank-scrubber in which the absorption tank and the scrubber are coupled to each other.

The scrubber 420 may be connected to the recovery line 305 of the ammonia recovery unit 300 to receive ammonia, but is not necessarily limited thereto. The scrubber 420 may be connected to the recovery branch line 306 as described above to receive ammonia.

In addition, the scrubber 420 may receive the scrubbing water and/or the treated water from the scrubbing water supply unit 600 and/or the exhaust gas purification unit 200.

The scrubber 420 may include a chamber in which ammonia is present, and the scrubbing water and/or the treated water may be sprayed or flowed into the chamber. Thus, ammonia may be absorbed into the scrubbing water and/or the treated water in contact with ammonia, thereby generating the ammonia water.

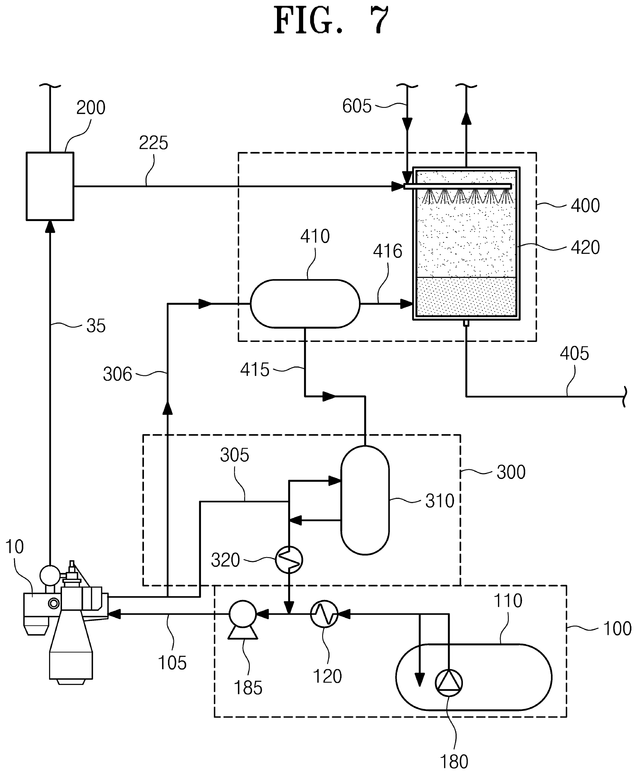

In one example, FIG. 7 illustrates an ammonia treatment system for an ammonia engine including the ammonia recovery unit 300, the exhaust gas purification unit 200, and the ammonia water generation unit 400 according to an embodiment of the present disclosure.

Referring to FIG. 7, the ammonia engine 10 may be connected to the ammonia supply unit 100 through the supply line 105, and may receive and consume the ammonia from the ammonia supply unit 100 to generate power.

The ammonia supply unit 100 may include an ammonia tank 110 in which ammonia is stored. The ammonia tank 110 may be connected to the supply line 105. The ammonia supply unit 100 may include a supply pump 180 for causing the ammonia to flow in the supply line 105. The supply pump 180 may be connected to the supply line 105 to flow ammonia toward the ammonia engine 10.

The ammonia supply unit 100 may include an ammonia heating unit 120, and the ammonia heating unit 120 may be provided in the supply line 105 or the like to heat ammonia fuel flowing toward the ammonia engine 10.

As the ammonia fuel is heated to a required value of the ammonia engine 10 using the ammonia heating unit 120, the lubricating oil temperature of the ammonia engine 10 may be maintained at an appropriate level, and thus the operation efficiency of the ammonia engine 10 may be improved.

The ammonia supply unit 100 may include a high pressure pump 185 that increases the pressure of the ammonia fuel. The high pressure pump 185 may generate a higher pressure of the ammonia fuel flowing through the supply line 105 than the pressure thereof obtained by the supply pump 180.

The high-pressure pump 185 may be located at one point of the supply line 105. When the pressure of the ammonia fuel is increased by the high-pressure pump 185 in accordance with the required value of the ammonia engine 10, vaporization of the ammonia may be suppressed and the operation efficiency of the ammonia engine 10 may be improved.

In one example, the ammonia recovery unit 300 may be provided in the above-described recovery line 305 or may be configured to include the recovery line 305. The ammonia recovery unit 300 or the recovery line 305 may connect the ammonia engine 10 to the supply line 105 and/or the ammonia supply unit 100.

For example, the recovery line 305 may connect the ammonia engine 10 and the ammonia supply unit 100 to each other. Thus, the ammonia recovered from the ammonia engine 10 may flow to the ammonia supply unit 100.

The ammonia may be recovered from the ammonia engine 10 when the ammonia engine 10 generally stops or when the ammonia engine 10 should be in an emergency stop.

Regarding some ammonia engines 10, the ammonia may be recovered therefrom even when the ammonia engine 10 operates normally. In another example, regarding the other ammonia engines 10, ammonia may not be recovered therefrom when the ammonia engine 10 operates normally.

The ammonia engine 10 of the present disclosure may be configured such that the ammonia is recovered therefrom when the ammonia engine 10 operates normally or ammonia is not recovered therefrom when the ammonia engine 10 operates normally.

The ammonia recovery unit 300 may include a collection tank 310. The collection tank 310 may separate the ammonia recovered from the ammonia engine 10 into the gaseous ammonia gas and the liquid ammonia liquid.

The ammonia recovered from the ammonia engine 10 may be a mixture of gas and liquid, and may contain oil provided to at least a portion of the ammonia engine 10. The oil may be, for example, a lubricating oil or a cooling oil supplied to an injector of the ammonia fuel. In another example, the ammonia recovered from the ammonia engine 10 may not contain the oil.

As described above, the ammonia recovered from the ammonia engine may exist in various forms. The collection tank 310 of the ammonia recovery unit 300 may be connected to the recovery line 305 to receive the recovered ammonia, and may separate the recovered ammonia into the gaseous ammonia gas and the liquid ammonia liquid.

The ammonia liquid in the liquid state may be supplied to the supply line 105 again through the recovery line 305 and re-supplied to the ammonia engine 10. A recovered ammonia temperature controller 320 may be provided at a position of the recovery line 305 in rear of the collection tank 310.

The temperature of the ammonia supplied from the ammonia recovery unit 300 to the supply line 105 may be adjusted to meet the required value required by the ammonia engine 10 using the recovered ammonia temperature controller 320, thereby improving the efficiency of the ammonia engine 10.

The collection tank 310 may be configured to condense the gaseous ammonia gas to generate an ammonia liquid and flow the generated ammonia liquid to the recovery line 305.

In one example, the recovery line 305 together with a portion of the supply line 105 may constitute a closed circulation line through which the recovered ammonia is supplied to the ammonia engine 10. Furthermore, the ammonia recovery unit 300 may include the recovery branch line 306 branched from the recovery line 305 and connected to the ammonia water generation unit 400 as described above.

The recovery branch line 306 may allow the recovery line 305 and the ammonia water generation unit 400 to communicate with each other, and may be a path through which a portion of the recovered ammonia flows toward the ammonia water generation unit 400.

The ammonia water generation unit 400 may communicate with the ammonia recovery unit 300 through the recovery branch line 306, etc. to receive ammonia. In an embodiment of the present disclosure, the ammonia water generation unit 400 may include a gas separator 410 in which the recovered ammonia supplied from the ammonia recovery unit 300 is stored.

The gas separator 410 may receive the recovered ammonia from the ammonia recovery unit 300 and separate the recovered ammonia into the ammonia gas and the ammonia liquid. The gas separator 410 may be connected to the recovery branch line 306 branched from the recovery line 305 to receive the recovered ammonia from the ammonia recovery unit 300.

The gas separator 410 may be configured to separate the ammonia gas from the recovered ammonia. The gas separator 410 may supply the ammonia gas separated from the recovered ammonia to the scrubber 420 as described above. The ammonia water generation unit 400 may include an ammonia gas transfer line 416 communicating the gas separator 410 and the scrubber 420 with each other.

The gas separator 410 may transfer the ammonia gas to the scrubber 420 through the ammonia gas transfer line 416, and the collected ammonia liquid may be supplied to the ammonia recovery unit 300 or the ammonia supply unit 100.

The gas separator 410 may communicate with the ammonia recovery unit 300 or the ammonia supply unit 100 through an ammonia liquid return line 415. The ammonia liquid collected by the gas separator 410 may be delivered to the ammonia recovery unit 300, the ammonia supply unit 100, the supply line 105, etc. through the ammonia liquid return line 415.

FIG. 7 illustrates the ammonia liquid return line 415 communicating the gas separator 410 with the collection tank 310 of the ammonia recovery unit 300 according to an embodiment of the present disclosure. The ammonia liquid transferred from the gas separator 410 to the collection tank 310 may be re-supplied to the ammonia engine 10 through the recovery line 305.

However, the ammonia liquid collected by the gas separator 410 is not necessarily limited to being supplied to the collection tank 310, and may be supplied to various components of the ammonia recovery unit 300 and the ammonia supply unit 100 as necessary.

As described above, the scrubber 420 may cause the ammonia gas to be absorbed into the scrubbing water and/or the treated water to generate the ammonia water. The scrubber 420 may receive the ammonia gas from the gas separator through the ammonia gas transfer line 416.

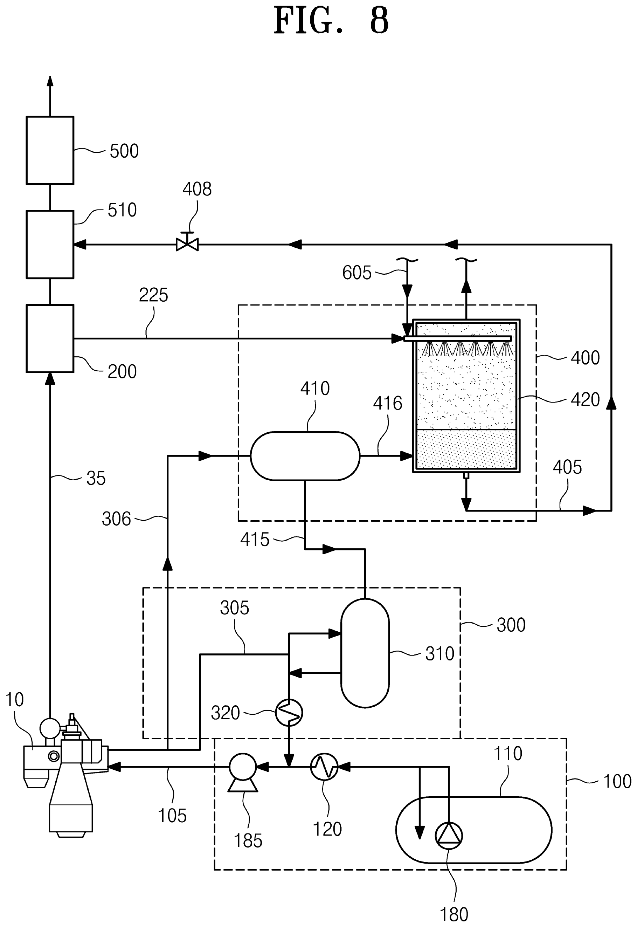

In one example, FIG. 8 illustrates an ammonia treatment system for an ammonia engine in which an ammonia water injection unit 510 and a nitrogen oxide reduction unit 500 are provided in the exhaust line 35 according to an embodiment of the present disclosure.

The ammonia treatment system for an ammonia engine according to an embodiment of the present disclosure may reduce the ammonia gas discharged into the atmosphere by using the ammonia water generation unit 400. It is advantageous to convert the ammonia gas into the ammonia water and handle or discard the ammonia water. Nevertheless, the ammonia water generated from the ammonia water generation unit 400 is not discharged without limitation thereon, and treatment or handling for disposal thereof may be required.

The ammonia treatment system for an ammonia engine according to an embodiment of the present disclosure may reduce nitrogen oxides in the exhaust gas by consuming the ammonia water. For example, in an embodiment of the present disclosure, the ammonia water generated from the ammonia water generation unit 400 may be supplied to the exhaust line 35, and the nitrogen oxide reduction unit 500 for removing the nitrogen oxides from the exhaust gas mixed with the ammonia water may be provided in the exhaust line 35.

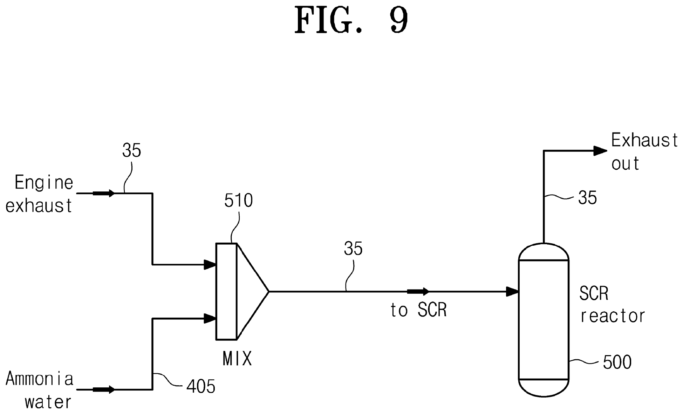

FIG. 9 conceptually illustrates a process of removing nitrogen oxides through the nitrogen oxide reduction unit 500 in a state in which the ammonia water has been supplied to the exhaust gas.

Referring to FIG. 9, the ammonia water injection unit 510 for supplying the ammonia water to the exhaust gas may be provided in the exhaust line 35 through which the exhaust gas generated after the combustion of the fuel in the ammonia engine 10 flows.

The ammonia water injection unit 510 may be supplied with ammonia water through an ammonia water transfer line through which the ammonia water generation unit 400 and the ammonia water injection unit 510 communicate with each other. The ammonia water injection unit 510 may be provided in the exhaust line 35 to inject the ammonia water supplied from the ammonia water generation unit 400 to the exhaust gas.

The exhaust gas mixed with the ammonia water may flow in an area downstream of the ammonia water injection unit 510 in the exhaust line 35. The nitrogen oxide reduction unit 500 may be disposed downstream of the ammonia water injection unit 510 in the exhaust line 35.

The nitrogen oxide reduction unit 500 may be provided in the exhaust line 35 to remove nitrogen oxides from the exhaust gas mixed with the ammonia water. The nitrogen oxide reduction unit 500 may change the nitrogen oxide in the exhaust gas into a non-harmful substance such as nitrogen, oxygen, water, and the like through a catalytic reaction.

Specifically, the nitrogen oxide (N0ₓ) may chemically react with ammonia water including ammonia (NH₃) and water (H₂0) to be changed into a form of nitrogen (N₂), oxygen (O₂), water, etc., which then may be removed.

The nitrogen oxide reduction unit 500 may include a catalyst for the chemical reaction, and thus, nitrogen oxide in the exhaust gas passing through the nitrogen oxide reduction unit 500 may react with the ammonia water through a catalytic reaction, and the like, and be converted into nitrogen, oxygen, or the like, which then may be removed.

Referring back to FIG. 8, the nitrogen oxide reduction unit 500 may be located downstream of the ammonia water injection unit 510 in the exhaust line 35. In FIG. 8, the exhaust gas purification unit 200 is shown to be located upstream of the ammonia water injection unit 510. However, embodiments of the present disclosure are not necessarily limited thereto.

The ammonia water transfer line may be constructed to allow the ammonia water to flow therein while communicating the ammonia water injection unit 510 and the ammonia water generation unit 400. The ammonia water transfer line may be connected to, for example, the scrubber 420 of the ammonia water generation unit 400.

The ammonia water transfer line may be provided with an ammonia water valve 408 whose an opening ratio is adjusted, and the ammonia water valve 408 may be directly adjusted by the user or controlled by the above-described controller 50.

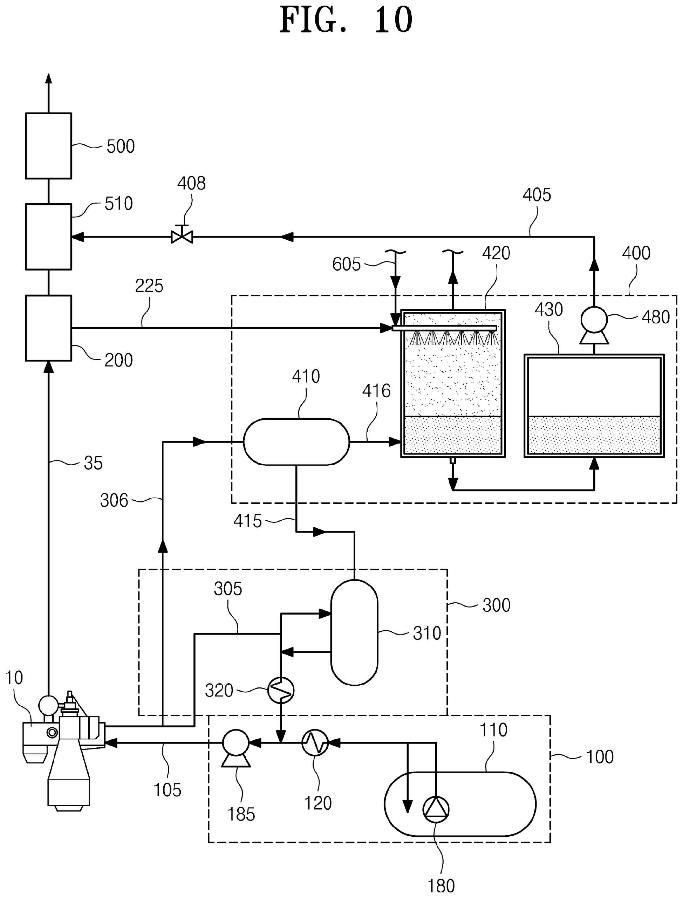

FIG. 10 illustrates the ammonia water generation unit 400 including an ammonia water storage tank 430.

The ammonia water storage tank 430 may receive and store therein the ammonia water from the scrubber 420. However, in an embodiment of the present disclosure, the means for generating ammonia water is not necessarily limited to the scrubber 420, and thus the ammonia water storage tank 430 may be connected to the means for generating the ammonia water in addition to the scrubber 420.

The ammonia water storage tank 430 may store therein the ammonia water generated in the scrubber 420 or the like. The ammonia water storage tank 430 may be provided in a ammonia water line 405. The ammonia water storage tank 430 may communicate with the scrubber 420 and the like through the ammonia water line 405.

The ammonia water storage tank 430 may be connected to the ammonia water injection unit 510 through the ammonia water line 405 to supply the ammonia water to the ammonia water injection unit 510.

When the ammonia water is supplied from the scrubber 420 to the ammonia water injection unit 510, the amount of the produced ammonia water may not be able to keep up with the amount of the consumed ammonia water, and the variation in the ammonia concentration in the ammonia water increases depending on the situation. This may be disadvantageous.

In an embodiment of the present disclosure, the ammonia water generation unit 400 may include the ammonia water storage tank 430 for storing the ammonia water generated in the scrubber 420 or the like. The ammonia water injection unit 510 receives the ammonia water through the ammonia water storage tank 430, so that the supply amount of ammonia water may be effectively secured and the fluctuation range of the ammonia concentration may be greatly reduced.

In one example, in an embodiment of the present disclosure, an ammonia water pump 480 for flowing ammonia water may be provided in the ammonia water line 405. The ammonia water pump 480 may be disposed downstream of the ammonia water storage tank 430.

That is, the ammonia water pump 480 for adjusting the pressure of the ammonia water may be provided in the ammonia water line 405 through which the ammonia water flows and which connects the ammonia water generation unit 400 and the ammonia water injection unit 510 to each other.

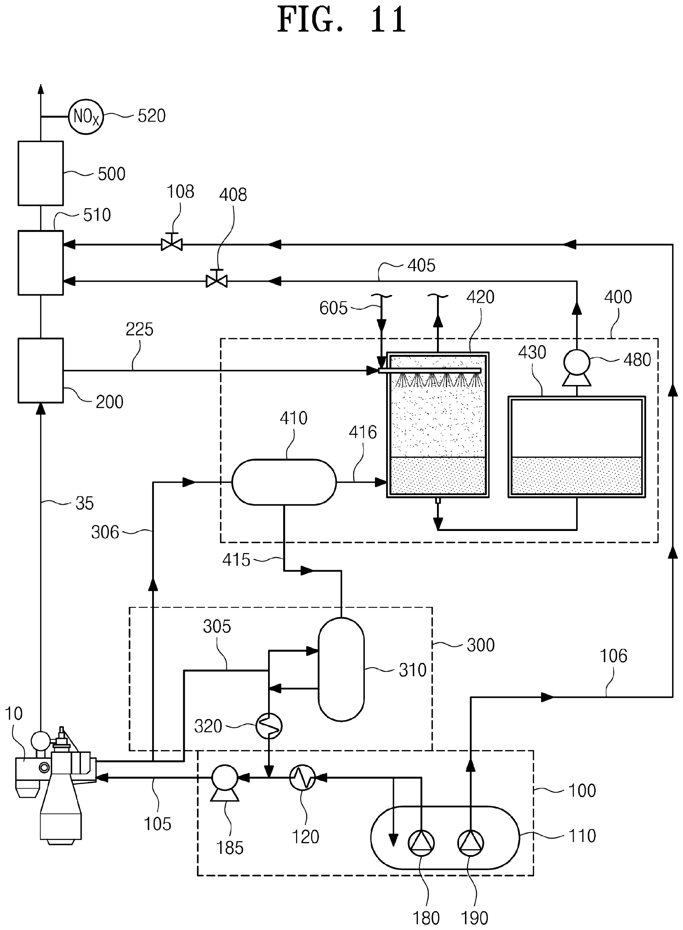

In one example, FIG. 11 illustrates an ammonia treatment system for an ammonia engine provided with an additional supply line 106 for ammonia in an embodiment of the present disclosure.

In an embodiment of the present disclosure, an ammonia injection unit may be configured to directly receive and inject the ammonia from the ammonia supply unit 100 in addition to the ammonia water generation unit 400 as described above.

That is, the exhaust line 35 may be provided with the ammonia injection unit connected to the ammonia supply unit 100 to inject the ammonia to the exhaust gas. In other words, the ammonia supply unit 100 may supply the ammonia liquid to the ammonia injection unit.

The ammonia injection unit may be disposed adjacent to the ammonia water injection unit 510. However, when necessary, the ammonia injection unit may be omitted, and the ammonia water injection unit 510 may be configured to inject both the ammonia supplied through the ammonia supply unit and the ammonia water supplied through the ammonia water generation unit 400.

Specifically, an appropriate level of ammonia may not be provided to the exhaust gas only with the ammonia water generated from the ammonia water generation unit 400, according to the concentration of nitrogen oxide in the exhaust gas, the production amount of ammonia water, or the concentration of ammonia in the ammonia water.

Accordingly, in an embodiment of the present disclosure, the ammonia supply unit 100 may be configured to directly supply the ammonia stored in the ammonia tank 110 to the exhaust line 35. The ammonia supply unit 100 may provide the ammonia to the exhaust line 35 through the additional supply line 106 connected to the ammonia tank 110 or the supply line 105.

The additional supply line 106 may be connected to the exhaust line 35, for example, the ammonia water injection unit 510. However, the exhaust line 35 may be provided with the ammonia injection unit connected to the additional supply line 106 separately from the ammonia water injection unit 510 connected to the ammonia water transfer line.

The additional supply line 106 may be provided with an additional supply valve 108 whose an opening ratio is adjusted. The opening ratio of the additional supply valve 108 may be directly adjusted by the user or may be adjusted by the above-described controller 50.

In an embodiment of the present disclosure, the ammonia supply unit 100 may include a supply pump 180 and an injection pump 190.

As described above, the supply pump 180 may be configured to allow the ammonia to flow to the supply line 105 connected to the ammonia engine 10. The injection pump 190 may allow the ammonia to flow to an injection line connected to the ammonia injection unit.

The injection pump 190 may be provided at one point of the additional supply line 106. For example, the injection pump 190 may be provided with the ammonia tank 110 and connected to the additional supply line 106. The injection pump 190 may be provided in the ammonia tank 110 to supply the liquid ammonia liquid to the ammonia water injection unit 510 or the ammonia injection unit.

However, the present disclosure is not necessarily limited thereto, and the ammonia supply unit 100 may be configured to supply a gaseous ammonia gas to the ammonia water injection unit 510 or the ammonia injection unit through the additional supply line 106.

In one example, in an embodiment of the present disclosure, a nitrogen oxide measuring unit 520 for measuring the amount of nitrogen oxide in the exhaust gas may be provided downstream of the nitrogen oxide reduction unit 500 in the exhaust line 35. In addition, the amount of ammonia injected from the ammonia injection unit may be adjusted based on the measured value of the nitrogen oxide measuring unit 520.

The nitrogen oxide measurement unit 520 may measure the amount of nitrogen oxide in the exhaust gas having passed through the nitrogen oxide reduction unit 500. For example, the nitrogen oxide measuring unit 520 may be configured to measure a concentration of nitrogen oxide in the exhaust gas.

The opening ratio of the ammonia water valve 408 of the ammonia water line 405 and/or the additional supply valve 108 of the additional supply line 106 may be controlled based on the amount of the nitrogen oxide measured in a position downstream of the nitrogen oxide reduction unit 500.

The controller 50 may receive the measured value of the nitrogen oxide measurement unit 520 and adjust the opening ratio of the ammonia water valve 408 and/or the additional supply valve 108 based on the measured value, thereby adjusting the concentration of the ammonia in the exhaust gas or adjusting a ratio between the consumption of the ammonia water and the consumption of the pure ammonia.

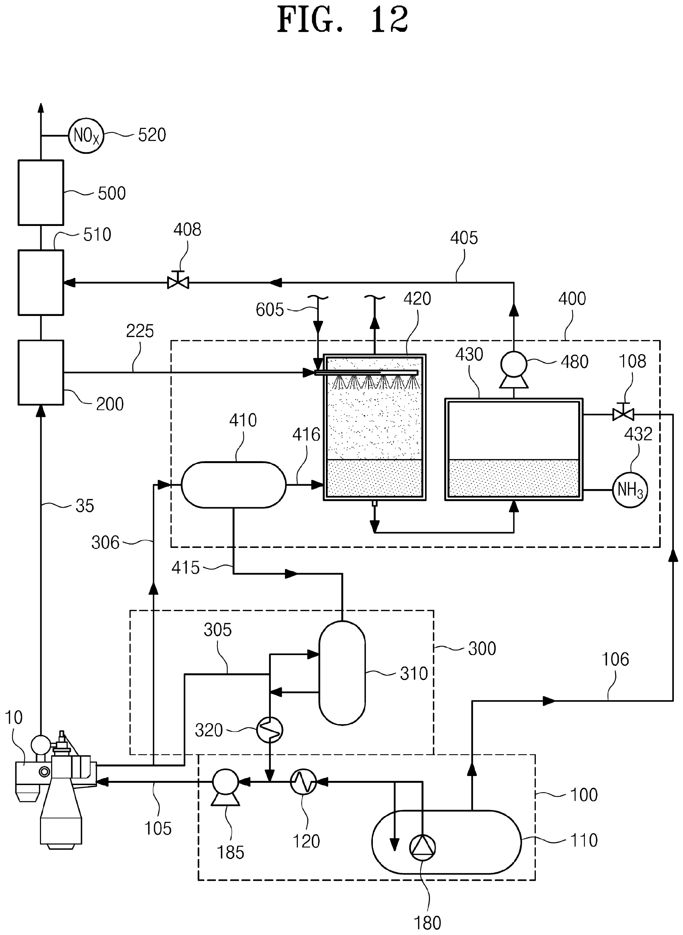

In one example, FIG. 12 illustrates an ammonia treatment system for an ammonia engine in which ammonia is supplied from the ammonia supply unit 100 to the ammonia water generation unit 400 according to an embodiment of the present disclosure.

In an embodiment of the present disclosure, the ammonia supply unit 100 may be configured to be connected to the ammonia water generation unit 400 rather than the ammonia water injection unit 510 described above and to supply the ammonia to the ammonia water generation unit 400. The ammonia water generation unit 400 may be connected to the ammonia supply unit 100 to receive ammonia therefrom.

The above-described additional supply line 106 may be configured to connect the ammonia supply unit 100 and the ammonia water generation unit 400 to each other. The ammonia supply unit 100 may be connected to the ammonia water generation unit 400 through the additional supply line 106 to supply the ammonia gas to the ammonia water generation unit 400.

The additional supply line 106 may be configured to connect the ammonia tank 110 and the ammonia water storage tank 430 to each other. However, the present disclosure is not necessarily limited thereto, and the additional supply line 106 may be configured to connect various components of the ammonia supply unit 100, such as the supply line 105 to various components of the ammonia water generation unit 400, such as the scrubber 420.

The ammonia supply unit 100 may supply the ammonia gas generated in the ammonia tank 110 to the ammonia water storage tank 430 or the like through the additional supply line 106. The ammonia water generation unit 400 may cause the ammonia supplied from the ammonia supply unit 100 to be absorbed into the scrubbing water and/or the treated water to generate the ammonia water. However, the ammonia supply unit 100 may supply an ammonia liquid other than ammonia gas to the ammonia water generation unit 400.

In an embodiment of the present disclosure, the ammonia water generation unit 400 may cause the ammonia gas supplied from the ammonia recovery unit 300 and the ammonia supplied from the ammonia supply unit 100 to be absorbed into the scrubbing water to generate the ammonia water.

That is, the ammonia water generation unit 400 may allow the ammonia provided from the ammonia recovery unit 300 and/or ammonia provided from the ammonia supply unit 100 to be absorbed into the scrubbing water and/or the treated water to generate the ammonia water.

The process in which the ammonia gas provided from the ammonia recovery unit 300 is absorbed into the scrubbing water and/or the treated water and the process in which the ammonia provided from the ammonia supply unit 100 is absorbed into the scrubbing water and/or the treated water may be performed in the same component or different components, and may be performed simultaneously or sequentially.

In one example, the ammonia water generation unit 400 of the present disclosure may include the scrubber 420 and the ammonia water storage tank 430 described above. The scrubber 420 may cause the ammonia gas provided from the ammonia recovery unit 300 to be absorbed into the scrubbing water, and the ammonia water storage tank 430 may be configured to store the ammonia supplied from the ammonia supply unit 100 in the ammonia water.

That is, the ammonia water storage tank 430 may cause the ammonia supplied from the ammonia supply unit 100 to be additionally absorbed into the ammonia water having absorbed the ammonia gas provided from the ammonia recovery unit 300 and stored in the ammonia water storage tank 430.

Accordingly, in an embodiment of the present disclosure, ammonia water may be primarily generated through the recovered ammonia generated from the ammonia engine 10, and the ammonia concentration in the ammonia water may be secondarily adjusted through the ammonia supplied from the ammonia supply unit 100.

The ammonia concentration in the ammonia water may vary depending on the operating state of the ammonia engine 10 or the operating state of the scrubber 420. However, for efficient treatment of nitrogen oxides in the exhaust gas, it may be advantageous that the ammonia concentration in the ammonia water is maintained at a necessary level.

Accordingly, in an embodiment of the present disclosure, ammonia may be supplied from the ammonia supply unit 100 to the ammonia water generation unit 400 through the additional supply line 106, and the ammonia water generation unit 400 may manage the ammonia concentration in the ammonia water to an appropriate level using the ammonia from the ammonia supply unit 100.

In an embodiment of the present disclosure, the ammonia water generation unit 400 may be provided with an ammonia concentration measuring unit 432 for measuring the ammonia concentration in the ammonia water in the ammonia water storage tank 430.

The ammonia concentration measuring unit 432 may be provided in the ammonia water storage tank 430. However, when necessary, the ammonia concentration measuring unit 432 may be provided in the scrubber 420 or an ammonia water additional storage tank 440 to be described later. The controller 50 may receive the measured value of the ammonia concentration measuring unit 432 and determine the ammonia concentration in the ammonia water based on the measured value.

An additional supply valve 108 having an opening ratio adjusted based on the measured value of the ammonia concentration measuring unit 432 may be provided in the additional supply line 106 connecting the ammonia supply unit 100 and the ammonia water generation unit 400 to each other.

The controller 50 may be configured to adjust the opening ratio of the additional supply valve 108 based on the measured value of the ammonia concentration measuring unit 432. Thus, the ammonia concentration in the ammonia water prepared by the ammonia water generation unit 400 may be efficiently managed.

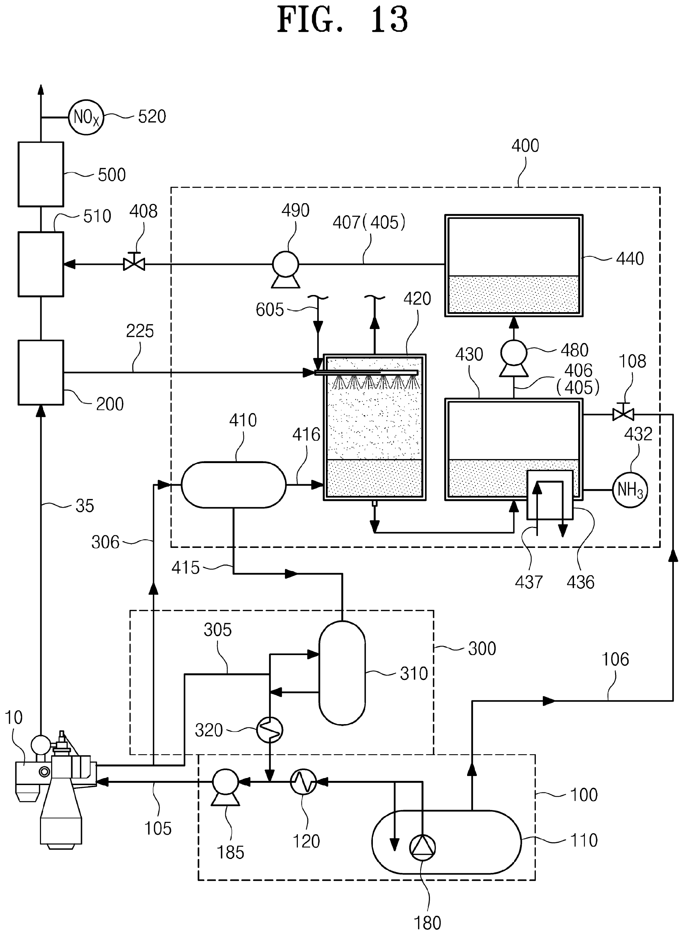

In one example, FIG. 13 illustrates a state in which a temperature controller 436 is provided in the ammonia water storage tank 430 according to an embodiment of the present disclosure.

In an embodiment of the present disclosure, the ammonia water storage tank 430 may be provided with the temperature controller 436 for adjusting the temperature of the ammonia water. The temperature controller 436 may be configured to adjust the temperature of the ammonia water stored in the ammonia water storage tank 430.

The ammonia water generation unit 400 may adjust the temperature of the ammonia water through the temperature controller 436. The process in which the ammonia gas is absorbed into the scrubbing water and/or the treated water corresponds to an exothermic process, and thus lowering the temperature of the ammonia water may be advantageous for the dissolution process of the ammonia gas.

Accordingly, the ammonia water generation unit 400 may improve the efficiency of generating the ammonia water by lowering or adjusting the temperature of the scrubbing water or the ammonia water to an appropriate temperature through the temperature controller 436 in the process of generating the ammonia water.

However, the temperature controller 436 is not necessarily provided in the ammonia water storage tank 430. When necessary, the temperature controller 436 may be provided in the scrubbing water line 605, the treated water transfer line 225, the scrubber 420, the ammonia water storage tank 430, and/or the ammonia water additional storage tank 440.

In one example, the temperature controller 436 may be configured to adjust the temperature of the ammonia water in various ways. For example, in an embodiment of the present disclosure, the temperature controller 436 may include a cooling water line 437 through which the cooling water flows.

The temperature controller 436 may be configured to adjust the temperature of the ammonia water through heat exchange between the cooling water flowing through the cooling water line 437 and the ammonia water.

In one example, in an embodiment of the present disclosure, the ammonia water generation unit 400 may include the ammonia water additional storage tank 440. The ammonia water additional storage tank 440 may receive and store therein the ammonia water from the ammonia water storage tank 430.

In this case, the ammonia water storage tank 430 may be connected to the ammonia water additional storage tank 440 through a first ammonia water line 406, and the ammonia water additional storage tank 440 may be connected to the ammonia water injection unit 510 through a second ammonia water line 407.

The first ammonia water line 406 may allow the scrubber 420 to communicate with the ammonia water storage tank 430, and the second ammonia water line 407 may allow the ammonia water storage tank 430 to communicate with the ammonia water additional storage tank 440. The ammonia water may sequentially flow through the scrubber 420, the first ammonia water line 406, the ammonia water storage tank 430, the second ammonia water line 407, and the ammonia water additional storage tank 440 in this order.

The ammonia water line 405 may include the first ammonia water line 406 and the second ammonia water line 407. The ammonia water storage tank 430 and the ammonia water additional storage tank 440 may be spaced apart from each other and may be provided on the ammonia water line 405.

As the ammonia water additional storage tank 440 is provided in the ammonia water generation unit 400 according to an embodiment of the present disclosure, it may be easy to adjust the storage capacity of the ammonia water and the maximum storage amount may be increased.

Furthermore, the ammonia water additional storage tank 440 may provide a concentration non-uniformity reducing space for reducing the non-uniformity of the ammonia concentration in the ammonia water.

Specifically, when the ammonia supplied from the ammonia water supply unit is provided to the ammonia water storage tank 430 as described above, a change in the ammonia concentration in the ammonia water may occur in the ammonia water storage tank 430 as well as the scrubber 420.

According to an embodiment of the present disclosure, the ammonia water primarily generated through the scrubber 420 may be mixed with the ammonia from the ammonia water storage tank 430 to secondarily adjust the ammonia concentration therein. The ammonia water of which the ammonia concentration has been adjusted in the ammonia water storage tank 430 is stored in the ammonia water additional storage tank 440, so that the ammonia water in which the ammonia is maintained an appropriate concentration may be efficiently supplied to the ammonia water injection unit 510.

In one example, when the additional ammonia water storage tank 440 is provided, the ammonia water pump 480 as described above may be provided in a position of the ammonia water line 405 between the ammonia water storage tank 430 and the additional ammonia water storage tank 440. An additional ammonia water pump 490 for generating a flow of ammonia water may be provided downstream of the additional ammonia water storage tank 440.

Although the present disclosure has been illustrated and described in connection with a specific embodiment, it will be obvious to a person skilled in the art that the present disclosure may be variously improved and changed within the scope not departing from the technical spirit of the present disclosure provided by the following claims.

## Claims

1. An ammonia treatment system for an ammonia engine, the ammonia treatment system comprising:
an ammonia engine driven by consuming fuel containing ammonia;
an ammonia supply unit configured to supply the ammonia to the ammonia engine;
an ammonia recovery unit configured to recover unconsumed ammonia from the ammonia engine;
an ammonia water generation unit configured to generate ammonia water from ammonia gas supplied from the ammonia recovery unit;
an ammonia water injection unit provided in an exhaust line through which exhaust gas discharged from the ammonia engine flows, wherein the ammonia water injection unit is configured to inject the ammonia water supplied from the ammonia water generation unit to the exhaust gas; and
a nitrogen oxide reduction unit provided in the exhaust line and configured to remove nitrogen oxide from the exhaust gas mixed with the ammonia water.

2. The ammonia treatment system for the ammonia engine of claim 1, wherein the ammonia water generation unit includes a gas separator configured to receive ammonia from the ammonia recovery unit and separate the ammonia into ammonia gas and ammonia liquid.

3. The ammonia treatment system for the ammonia engine of claim 2, wherein the ammonia recovery unit includes a recovery line constructed to connect the ammonia engine and the ammonia supply unit to each other and guide the ammonia recovered from the ammonia engine to flow to the ammonia supply unit,
wherein the gas separator is connected to a recovery branch line branching from the recovery line and receives ammonia from the ammonia recovery unit via the recovery branch line.

4. The ammonia treatment system for the ammonia engine of claim 2, wherein the gas separator supplies collected ammonia liquid to the ammonia recovery unit or the ammonia supply unit.

5. The ammonia treatment system for the ammonia engine of claim 1, wherein the ammonia water generation unit includes a scrubber configured to cause the ammonia gas to be absorbed into scrubbing water to generate the ammonia water.

6. The ammonia treatment system for the ammonia engine of claim 5, wherein the ammonia water generation unit further includes an ammonia water storage tank configured to receive and store therein the ammonia water from the scrubber.

7. The ammonia treatment system for the ammonia engine of claim 1, wherein the ammonia water generation unit is configured to cause the ammonia gas to be absorbed into scrubbing water supplied through a scrubbing water supply unit, thereby generating the ammonia water.

8. The ammonia treatment system for the ammonia engine of claim 1, wherein the ammonia treatment system further comprises an ammonia water line connecting the ammonia water generation unit and the ammonia water injection unit to each other, wherein the ammonia water flows in the ammonia water line, wherein an ammonia water pump configured to adjust a pressure of the ammonia water is disposed in the ammonia water line.

9. The ammonia treatment system for the ammonia engine of claim 1, wherein the ammonia water generation unit includes:
a scrubber configured to cause the ammonia gas to be absorbed into scrubbing water to generate the ammonia water; and
an ammonia water storage tank constructed to receive the ammonia water from the scrubber and to store therein the ammonia water,
wherein the ammonia water storage tank is connected to the ammonia water injection unit through an ammonia water line and supplies the ammonia water to the ammonia water injection unit via the ammonia water line.

10. The ammonia treatment system for the ammonia engine of claim 1, wherein an ammonia injection unit connected to the ammonia supply unit and configured to inject the ammonia to the exhaust gas is disposed in the exhaust line,
wherein the ammonia supply unit is further configured to supply ammonia liquid to the ammonia injection unit.

11. The ammonia treatment system for the ammonia engine of claim 10, wherein the ammonia treatment system further comprises a nitrogen oxide measuring unit configured to measure an amount of nitrogen oxide in the exhaust gas, wherein the nitrogen oxide measuring unit is disposed in the exhaust line and at a position downstream of the nitrogen oxide reduction unit,
wherein an amount of ammonia injected from the ammonia injection unit is adjusted based on a measurement value of the nitrogen oxide measurement unit.

12. The ammonia treatment system for the ammonia engine of claim 1, wherein the ammonia water generation unit is connected to the ammonia supply unit and receives ammonia therefrom,
wherein the ammonia water generation unit is configured to cause the ammonia gas supplied from the ammonia recovery unit and the ammonia supplied from the ammonia supply unit to be absorbed into scrubbing water, thereby generating the ammonia water,
wherein the ammonia supply unit is connected to the ammonia water generation unit via an additional supply line and is configured to supply ammonia gas to the ammonia water generation unit via the additional supply line.

13. The ammonia treatment system for the ammonia engine of claim 14, wherein the ammonia water generation unit includes:
a scrubber configured to cause the ammonia gas supplied from the ammonia recovery unit to be absorbed into scrubbing water to generate the ammonia water; and
an ammonia water storage tank constructed to receive the ammonia water from the scrubber and to store therein the ammonia water,
wherein the ammonia water storage tank is configured to store the ammonia supplied from the ammonia supply unit into the ammonia water.

14. The ammonia treatment system for the ammonia engine of claim 13, wherein the ammonia water generation unit includes an ammonia concentration measurement unit configured to measure an ammonia concentration in the ammonia water in the ammonia water storage tank,
wherein an additional supply valve whose an opening ratio is adjusted based on a measurement value of the ammonia concentration measurement unit is disposed in an additional supply line connecting the ammonia supply unit and the ammonia water generation unit to each other.

15. The ammonia treatment system for the ammonia engine of claim 13, wherein the ammonia water storage tank includes a temperature controller for controlling a temperature of the ammonia water,
wherein the temperature controller includes a cooling water line through which cooling water flows.
